# EUROPÄISCHE PATENTSCHRIFT

(11) **EP 2 558 740 B1**
(45) Veröffentlichungstag und Bekanntmachung des Hinweises auf die Patenterteilung: **28.01.2015**
(21) Anmeldenummer: 11717484.7
(22) Anmeldetag: 14.04.2011
(51) Int. Cl.: F16D 23/06

(54) **SYNCHRONEINHEIT FÜR EIN SCHALTGETRIEBE**
SYNCHRONISER UNIT FOR A MANUAL TRANSMISSION
UNITÉ DE SYNCHRONISATION POUR BOÎTE DE VITESSES

(30) Priorität: 16.04.2010 DE 102010015471
(43) Veröffentlichungstag der Anmeldung: 20.02.2013
(73) Patentinhaber: Getrag Ford Transmissions GmbH, 50735 Köln (DE)
(72) Erfinder: FAUST, Peter, 42399 Wuppertal (DE); ROGALSKI, Sebastian, 51109 Köln (DE); FRANKENBERG, Dietmar, 50829 Köln (DE)
(74) Vertreter: Albiger, Jonas
(86) Internationale Anmeldenummer: PCT/EP2011/001886
(87) Internationale Veröffentlichungsnummer: WO 2011/128097

(56) Entgegenhaltungen:
- EP-A1- 1 340 925
- FR-A1- 2 841 948
- FR-A1- 2 902 477
- JP-A- 2004 044 648
- US-A1- 2008 135 368

## Beschreibung

Die Erfindung betrifft eine Synchroneinheit für eine Schaltgetriebe, das wenigstens eine um eine Achse drehbare Welle und wenigstens ein erstes auf der Welle sitzenden Losrad mit einem Kupplungskörper umfasst, der eine konische Reibfläche aufweist.

Aus der DE 696 17 821 T2 ist eine Synchronisierungsvorrichtung oder Synchroneinheit für ein Getriebe bekannt, die eine Nabe umfasst, die, soweit sich die Synchroneinheit im Getriebe eingesetzt ist, drehfest auf einer Welle des Getriebes sitzt. Ein Synchronring, der relativ zur Nabe begrenzt verdrehbar ist, weist einen Anschlagnocken und eine konische Reibfläche auf, die sich axial gegen die konische Reibfläche eines Kupplungskörpers eines Losrads des Getriebes drücken lässt. Zudem weist die Synchroneinheit eine Schiebemuffe auf, die axial verschiebbar und drehfest mit der Nabe verbunden ist. An einer Umfangsinnenfläche der Schiebemuffe ist eine Kontaktfläche in Form einer Rampe und eine Verzahnung vorgesehen. Die Verzahnung stellt nach erfolgreicher Synchronisation von Welle und Losrad einen Formschluss mit einem Zahnrad des Kupplungskörpers her, wodurch Welle und Losrad in Drehrichtung fest miteinander verbunden sind. Ein dem Losrad zugeordneter Gang im Schaltgetriebe wäre damit eingelegt.

In der Nabe ist ein erster Hebel angeordnet, der ein Hebelende und einen Hebelkopf aufweist. Der Hebelkopf liegt an der Rampe der Schiebemuffe an, wobei die Neigung der Rampe bzw. des Hebelkopfs derart ausgelegt sind, dass eine an der Schiebemuffe angreifende Kraft, die in eine erste axiale .Richtung wirkt, den Hebelkopf in axialer Richtung als auch in radialer Richtung drückt. In Folge des axialen Drucks gegen den Hebelkopf wird der Hebel gegen den Synchronring gedrückt, welcher sich mit seiner Reibfläche wiederum gegen der konisch geformten Reibfläche des Kupplungskörpers abstützt. Dadurch wirkt auf den Synchronring, soweit die Drehzahlen von Synchronring und Kupplungskörper noch nicht synchronisiert sind, ein Reibmoment. Dieses Reibmoment verdreht den Synchronring relativ zur Nabe. Der Synchronring kommt dabei mit seinem Anschlagnocken in Anlage mit dem Hebelende. Ist das Reibmoment größer als das Moment, welches durch den Druck des Hebelendes auf den Anschlagnocken wirkt, lassen sich der Hebel und über die Wirkkette Hebelkopf-Rampe die Schiebemuffe nicht weiter bewegen. Dieses Moment kann als Hebel-Entsperrmoment bezeichnet werden.

Erst wenn das Reibmoment aufgrund erfolgter Synchronisation null ist, lässt sich der Synchronring gegen das nicht mehr vorhandene Reibmoment verdrehen, wodurch der Anschlagnocken dem Druck des Hebelendes ausweichen kann. Dadurch lässt sich der Hebelkopf radial nach innen drücken, so dass er einer weiteren axialen Verschiebung der Schiebemuffe und somit einem formschlüssigen Einrücken der Verzahnung der Schiebemuffe in das Zahnrad des Kupplungskörpers nicht mehr im Weg steht. In diesem Fall ist das Hebel-Entsperrmoment größer als das Reibmoment, die zunächst beabsichtige Synchronisationssperre ist aufgehoben.

Bei hohen Drehzahlen wirken jedoch auf den Hebel große Fliehkräfte, die beim Drücken des Hebelkopfes radial nach innen ebenfalls überwunden werden müssen. Dies führt letztlich zu einer von der Drehzahl abhängigen Schaltkraft (entspricht der axialen Kraft auf die Schiebemuffe), was insbesondere bei einem manuell betätigten Schaltgetriebe das Schalten erschwert.

Die FR 2902477 A1 offenbart ebenfalls eine Synchroneinheit für ein Schaltgetriebe, die eine axial verschiebbare Schiebemuffe und einen Synchronring mit einer konisch geformten Reibfläche aufweist, die mit einer ebenfalls konisch geformten Reibfläche eines Kupplungskörpers eines Losrads in Eingriff steht und die ein Drehmoment auf das Losrad überträgt, wenn der Synchronring axial mit Druck beaufschlagt wird. Wie auch bei der Synchroneinheit der DE 696 17 821 T2 wird der axiale Druck durch einen Hebel erzeugt, der beim Schaltvorgang durch die Schiebemuffe seinerseits axial verschoben wird und dabei radial nach innen gedrückt wird. Auch die EP 1 340 925 A1 offenbart eine Synchroneinheit mit einem Synchronring und einem Hebel, der beim Schaltvorgang axial und radial nach innen verschoben wird und den Synchronring gegen ein Losrad drückt, um so für einen Gleichlauf von Synchronring und Losrad zu sorgen, der für einen erfolgreichreichen Schaltvorgang notwendig ist. Die bereits oben angesprochenen, auf den Hebel wirkenden Fliehkräfte beeinflussen auch hier die aufzuwendenden Schaltkräfte, wobei bei hohen Drehzahlen entsprechend hohe Fliehkräfte überwunden werden müssen.

Der Erfindung liegt daher die Aufgabe zu Grunde, eine Synchroneinheit der oben beschriebenen Art bereit zu stellen, das sich einfach und komfortabel schalten lässt.

Die der Erfindung zu Grunde liegende Aufgabe wird mit der Merkmalskombination gemäß Anspruch 1 gelöst. Bevorzugte Ausführungsbeispiele können den Unteransprüchen entnommen werden.

Ein wesentlicher Unterschied zu der oben beschriebenen Synchroneinheiten besteht gemäß Anspruch 1 darin, dass der Synchronring eine Sperrverzahnung aufweist, wobei in einer Sperrposition des Synchronrings die Verzahnung der Schiebemuffe mit der Sperrverzahnung in Anlage ist. Dadurch entsteht, neben dem oben bereits erwähnten Hebel-Entsperrmoment ein weiteres Moment, das dem Reibmoment ebenfalls entgegensteht und als Verzahnungs-Entsperrmoment bezeichnet werden kann. Die Sperrposition bezieht sich dabei auf die Position in Umfangsrichtung des Synchronrings, sie schließt somit auch den Fall ein, dass der Synchronring am Hebelende anliegt, jedoch die Verzahnung der Schiebemuffe noch nicht an der Sperrverzahnung anliegt.

Erfindungsgemäß ist vorgesehen, dass sich der Synchronring, zumindest über weite Bereiche der Synchronisation und bevorzugt über die gesamte Synchronisation (Aufbau des Reibmoments bis zur anschließenden Reduktion auf null) ausschließlich über seinen Anschlagnocken nur an dem Hebelende und/oder über seine Sperrverzahnung an der Verzahnung der Schiebemuffe abstützt. Von einer Abstützung des Sperrnockens beispielsweise an einem festen Anschlag der Nabe kann somit abgesehen werden.

Soweit die Sperrverzahnung des Synchronrings und die Verzahnung der Schiebemuffe bei der (Vor-)Synchronisierung noch nicht im Eingriff sind, erfolgt die Abstützung des Synchronrings in Umfangsrichtung über den Hebel bzw. das Hebelende. Aufgrund der Auslegung von Kontaktfläche der Schiebemuffe und des Hebelkopfes wird bei axialer Verschiebung der Schiebemuffe der Hebel auch in radialer Richtung nach innen gedrückt. Dadurch ändert sich die Position des Hebelendes, welche als alleiniger Anschlag für den Anschlagnocken des Synchronrings fungiert. Somit ist die Sperrposition (Position des Synchronrings in Umfangsrichtung) nicht konstant, sondern variabel. Jedoch ist anzumerken, dass die durch die radiale Bewegung des Hebels hervorgerufene Änderung in Umfangsrichtung so ausgelegt ist, dass die Sperrverzahnung des Synchronrings und die Verzahnung der Schiebemuffe zur Anlage kommen und es einer Drehung des Synchronrings aus der Sperrposition bedarf, damit die einzelnen Zähne der Verzahnung der Schiebemuffe axial an der Sperrverzahnung vorbei gleiten können. Dies bedeutet, dass sich der Synchronrings in Umfangsrichtung zumindest in der Endphase-7 der Synchronisation immer auch an der Verzahnung der Schiebemuffe abstützt.. Bei der "Sperrposition" handelt es sich somit nicht um eine exakte und unveränderbare Position in Umfangsrichtung, sondern um einen kleinen Winkelbereich von Umfangspositionen, die der Synchronring, jeweils in Anlage mit dem Hebelende, durchläuft, bis die Verzahnung der Schiebmuffe und die Sperrverzahnung des Synchronrings zur Anlage kommen. Dieser Winkelbereich kann kleiner als 3°, 2° oder 1 ° (Vollkreis 360°) sein.

Soweit die Synchroneinheit als Synchronisation mit Sperrwirkung ausgelegt ist, dreht erst bei Wegfall des Reibmomentes aufgrund vollständiger Anpassung der Drehzahlen von Synchronring und Kupplungskörper die Resultierende der Entsperrmomente den Synchronring aus der Sperrposition.

Die Reibflächen von Synchronring und Kupplungskörper sind vorzugsweise konisch ausgestaltet und bilden eine Reibpaarung. Es können aber durch zwischengeschaltete Reibringe mit mehr als nur eine Reibpaarung gebildet werden.

Die erfindungsgemäße Synchroneinheit mit der zusätzlichen Sperrverzahnung führt zu anderen Auslegungsmöglichkeiten hinsichtlich des Hebel-Entsperrmoments bezogen auf das Reibmoment: Aufgrund des Verzahnungs-Entsperrmoments, das in einem bevorzugten Ausführungsbeispiel kleiner als das Reibmoment ist, also eine Sperrwirkung entfaltet, ist das Hebel-Entsperrmoment zumindest in einer Anfangsphase der Synchronisation größer als das Reibmoment. In dieser Anfangsphase lässt sich die Schiebemuffe ohne sperrende Wirkung verschieben. Durch die Auslegung von Kontaktfläche und Hebelkopf können in einer der Anfangsphase nachgeschalteten Phase das Hebel-Entsperrmoment und das Verzahnungs-Entsperrmoment mit dem Reibmoment ins Gleichgewicht gesetzt werden. Das resultierende Entsperrmoment stützt somit das Reibmoment in Umfangsrichtung ab. Die starre Anschlag- oder Umschlagposition, wie sie bei einem festen Anschlag in der Nabe aus dem Stand der Technik bekannt ist, wird zu einer in Umfangsrichtung dynamischen Positionierung in Abgängigkeit des Momentengleichgewichtes.

Der erste Hebel kann C-förmig ausgebildet sein. Dabei kann der Hebelkopf zwischen zwei Hebelenden angeordnet sein. Die Synchroneinheit kann zumindest einen weiteren Hebel aufweisen. Die Hebel können in einer Ebene senkrecht zur Achse der Welle liegen und im Wesentlichen einen Winkelbereich von jeweils ca. 140 bis 170° abdecken. Bei zwei Hebeln sind zweckmäßigerweise zwei Anschlagnocken vorzusehen, welche um 180° versetzt angeordnet werden können. In diesem Fall erfolgt eine Abstützung des Synchronrings in seiner Sperrposition durch die Anschlagnocken an beiden Hebeln und, wenn die Verzahnung der Schiebemuffe auf die Sperrverzahnung des Synchronrings stößt, auch an der Schiebemuffe.

Im Folgenden werden Ausführungen nur zu einem Hebel gemacht. Es versteht sich, dass bei Verwendung mehrerer Hebel diese Ausführungen für die anderen Hebel analog gelten können.

In einem bevorzugten Ausführungsbeispiel vollführt der erste Hebel durch den axialen Druck auf den Hebelkopf im wesentlichen eine Schwenkbewegung um eine Schwenkachse, die bevorzugt senkrecht zur Achse der Welle verläuft, wobei ein Hebellängenverhältnis des Hebels, also ein Verhältnis zwischen einem Abstand des Hebelkopfes zur Schwenkachse einerseits und einem Abstand zwischen Schwenkachse und Berührpunkt zwischen Hebel und Synchronring andererseits ungleich 1 ist. Somit führt die axiale Kraft, welche auf die Schiebemuffe wirkt, durch ein entsprechendes Hebellängenverhältnis zu einer verminderten oder verstärkten axialen Kraft, welche von dem Berührpunkt des Hebels auf den Synchronring übertragen wird.

Die Kontaktfläche der Schiebemuffe und der Hebelkopf können eine erste Rampe mit einer Neigung kleiner als 45° Grad bezogen auf die Achse der Welle umfassen. Bei geringen Neigungswinkeln von beispielsweise 10 bis 20° kann mit kleinen axialen Kräften (Schaltkräfte), welche in die Schiebemuffe eingeleitet werden, der Hebelkopf radial nach innen gedrückt werden, auch wenn aufgrund hoher Drehzahlen dieser Bewegung hohe Fliehkräfte entgegenstehen. Durch geringe Neigungswinkel wird zwar auch grundsätzlich ein hohes Hebel-Entsperrmoment erzeugt, welches aber bevorzugt durch entsprechende Auslegung der Synchroneinheit bei erfolgter Anlage von Verzahnung der Schiebemuffe und Sperrverzahnung sich mit dem Verzahnungs-Entsperrmoment auf die Höhe des Reibmoments nivelliert. Durch dieses Momentengleichgewicht wird die Sperrwirkung erreicht.

In einem bevorzugten Ausführungsbeispiel sind Kontaktfläche und der Hebelkopf derart ausgebildet, dass ausgehend von einer Neutralstellung N der Schiebemuffe diese in die erste axiale Richtung und in eine zweite axiale Richtung verschiebbar ist, wobei der Hebelkopf ebenfalls in die erste axiale Richtung bzw. in die zweite axiale Richtung gedrückt wird. Dabei kann die Synchroneinheit in doppelter Weise verwendet werden, wobei durch Verschiebung in die zweite axiale Richtung ein weiterer Gang des Schaltgetriebes eingelegt werden kann. Vorzugsweise kann dies ein Rückwärtsgang des Schaltgetriebes sein.

Bei der Verschiebung der Schiebemuffe in die zweite axiale Richtung kann der Hebel ebenfalls eine Schwenkbewegung vollführen, wobei sich Position von Schwenkachse und Position und Berührpunkt zwar ändern, jedoch der Hebel wie bei der Verschiebung der Schiebemuffe in die erste axiale Richtung den Synchronring wieder in die gleiche Richtung drückt, wodurch Reibung entsteht und ebenfalls die Drehzahlen von Welle und erstem Losrad synchronisiert werden. In diesem Fall jedoch kommen die Verzahnung der Schiebemuffe und die Sperrverzahnung des Synchronringes nicht in Anlage, da sich die Schiebemuffe von dem Synchronring axial wegbewegt. Somit kann kein Verzahnungs-Entsperrmoment aufgebaut werden. Um sicherzustellen, dass bei einer derartigen Synchronisation ebenfalls eine Sperrwirkung einstellt, muss das Hebel-Entsperrmoment von Anfang an so gewählt werden, dass es kleiner als das Reibmoment ist.

Es kann auch vorgesehen sein, dass für die Verschiebung in die zweite axiale Richtung zusätzliche Hebel eingesetzt werde, die dann beispielsweise für die Kraftbeaufschlagung eines zweiten Synchronrings eingesetzt werden.

Eine Möglichkeit, Einfluss auf das Hebel-Entsperrmoment zu nehmen, ist dabei das Hebellängenverhältnis. Das Hebellängenverhältnis, welches sich beim Hebel für die Verschiebung der Schiebemuffe in die erste axiale Richtung ergibt, kann dabei ungleich dem Hebellängenverhältnis für die Verschiebung der Schiebemuffe in die zweite axiale Richtung sein. Beispielsweise kann das Hebellängenverhältnis für die erste axiale Richtung größer 1 sein, während es für die zweite axiale Richtung kleiner 1 ist. Vorzugsweise weist das Hebellängenverhältnis für die erste axiale Richtung Werte von 1,1 bis 1,5 auf, während das Hebellängenverhältnis für die zweite axiale Richtung im Bereich von 0,6 bis 0,95 liegt.

Eine andere Möglichkeit, Einfluss auf die Höhe des Hebel-Entsperrmoments zu nehmen, besteht darin, Kontaktfläche und Hebelkopf mit einer anders geneigten Rampe auszustatten. So können die Kontaktfläche der Schiebemuffe und der Hebelkopf eine zweite Rampe umfassen, welche eine Neigung aufweist, die bei Verschiebung der Schiebemuffe in die zweite axiale Richtung in Wirkung tritt und größer als die Neigung der ersten Rampe ist (beispielsweise 30 bis 60°).

Anhand eines in den Figuren dargestellen Ausführungsbeispiels wird die Erfindung näher erläutert. Es zeigen:
- Figur 1: eine perspektivische Explosionsdarstellung einer erfindungsgemäßen Synchroneinheit;
- Figur 2: eine Seitenansicht der Synchroneinheit mit einer ersten Axialposition einer Schiebemuffe; und
- Figur 3: eine Seitenansicht der Synchroneinheit mit einer zweiten Axialposition der Schiebemuffe.

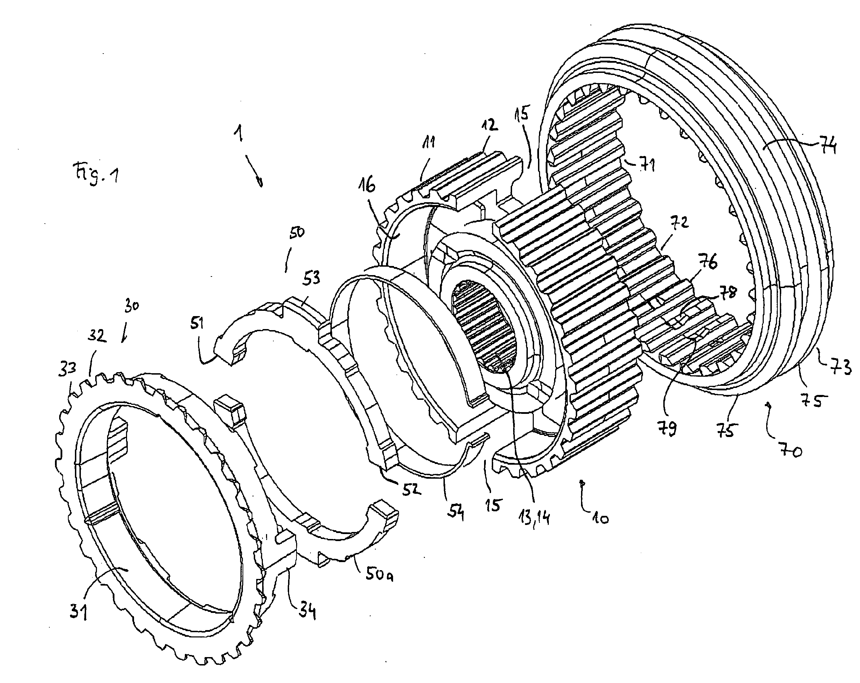

Figur 1 zeigt in perspektivischer Explosionsansicht eine Synchroneinheit 1, die in ihrer Gesamtheit mit 1 bezeichnet wird. Die Synchroneinheit 1 weist eine Nabe 1 Cr auf, die an einer Außenumfangsfläche 11 eine Verzahnung'12 aufweist. An einer Innenumfangsfläche 13 ist eine weitere Verzahnung 14 vorgesehen. Im Abstand von 180° weist die Außenumfangsfläche 11 zwei Aussparungen 15 auf.

Die Synchroneinheit 1 umfasst des Weiteren einen Synchronring 30, zwei C-förmige Hebel 50 und 50a sowie eine Schiebemuffe 70. Der Synchronring 30 weist eine konische Reibfläche 31 und eine Sperrverzahnung 32 mit einer Vielzahl von radial nach außen zeigenden Sperrzähnen 33 auf, die an einer der Nabe 10 abgewandten Stirnseite angeordnet. An einer der Nabe 1.0 zugewandten Stirnseite weist der Synchronring 30 zwei Anschlagnocken 34, 34a auf. Die Anschlagnocken 34, 34a sind um 180° versetzt angeordnet und erstrecken sich in axialer Richtung zur Nabe 10 hin.

Der Hebel 50 (dies gilt sinngenmäß auch für Hebel 50a) ist, wie oben bereits ausgeführt, C-förmig ausgebildet und weist zwei Hebelenden 51, 52 auf. Mittig zwischen den Hebelenden 51, 52 ist ein Hebelkopf vorgesehen, der mit 53 bezeichnet ist. Der Hebelkopf 53 lässt sich dabei axial in eine der Aussparungen 15 der Nabe 10 einsetzen, sodass dieser durch die Aussparung 15 ragt und sich die Hebelenden 51, 52 in einem Hohlraum 16 der Nabe 10 befinden. Den Hebeln 50, 50a lässt sich eine ebenfalls C-förmige Blattfeder 54 zuordnen. Alternativ oder zusätzlich können andere Federmittel eingesetzt werden, die sich einerseits an der Nabe und andererseits am Hebel 50 abstützen.

Die Schiebemuffe weist eine Innenumfangsfläche 71 mit einer Verzahnung 72 auf. An einer Außenumfangsfläche 73 ist eine umlaufende Nut 74 vorgesehen, in die eine hier nicht dargestellte Schaltgabel greifen kann. Über die Nut 74 bzw. über deren Nufinrände 75 können in die Schiebemuffe von außen axiale Kräfte eingeleitet werden.

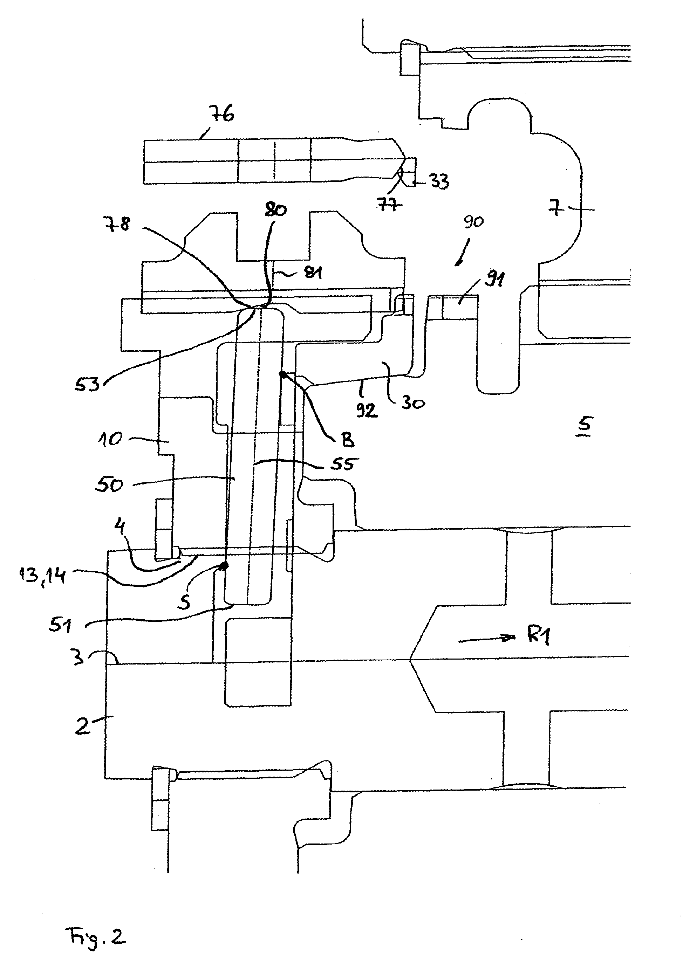

Figur 2 zeigt eine Seitenansicht der Synchroneinheit 1 im zusammengebauten Zustand und im Zusammenspiel mit Teilen eines Getriebes. Teile oder Merkmale der Figur 1 werden in den folgenden Figuren mit gleichen Bezugszeichen versehen.

Die Nabe 10 sitzt auf einer Welle 2 mit einer Achse 3. Die Verzahnung 13 an der Umfangsinnenfläche 14 der Nabe 10 sorgt dabei in Eingriff mit einer Außenverzahnung 4 der Welle 2 für eine drehfesten Sitz zwischen Nabe 10 und Wel le 2.

Der Synchronring 30 liegt mit seiner konischen Reibfläche 31 an einem Losrad 5 an. Das Losrad 5, das drehbar gelagert auf der Welle 2 sitzt, umfasst eine Hauptverzahnung 6, die mit einem Zahnrad 7 kämmt. Zudem weist das Losrad 5 ein Kupplungskörper 8 mit einer konischen Reibfläche 9 und einem Kupplungszahnrad 10 auf.

Figur 2 zeigt die Schiebemuffe 70 in einer axialen Position, bei der die Verzahnung 72 mit den einzelnen Zähnen 76 in Anlage sind mit den einzelnen Sperrzähnen 33 des Synchronrings 30. Soweit eine Drehzahldifferenz zwischen dem Synchronring 30 und dem Losrad 5 gegeben ist und der Synchronring 30 in einer ersten axialen Richtung R1 gegen das Losrad 5 gedrückt wird, wirkt auf den Synchronring 30 ein Reibmoment in Umfangsrichtung. Der Synchronring stützt sich dabei in Umfangsrichtung mit seinen angespitzten Sperrzähnen 33 an schrägen Zahnflanken 77 der Zähne 76 der Schiebemuffe 70 ab. Eine weitere Abstützung in Umfangsrichtung erfolgt grundsätzlich durch die Anlage des Synchronrings 30 mit dem hier nicht dargestellten Anschlagnocken 34, 34a (siehe Figur 1) an dem Hebelende 51.

Die Kraft, die in den Hebel 50 am Hebelende 51 eingeleitet wird, stützt sich über den Hebelkopf 53 an einer Rampe 78 einer Kontaktfläche 80 der Schiebemuffe 70 ab. Aufgrund der Neigung der Rampe 78 zur Achse 3 von can. 30° wird der Hebelkopf 53 auch in die axiale Richtung R1 gedrückt. Der Hebel 50 wird dadurch um eine Schwenkachse S geschwenkt, die senkrecht zur Achse 3 und zur Zeichenebene verläuft. Man erkennt, dass der Abstand von der Schwenkachse S zu einem Berührpunkt B, an dem der Hebel 50 an dem Synchronring 30 anliegt, kleiner ist als der Abstand zwischen Hebelkopf und Schwenkachse S, sodass die wirksamen Hebellängen des Hebels 50 zu einer Verstärkung der axialen Kraft führen, mit der gegen den Synchronring 30 gedrückt wird. Das Hebellängenverhältnis (Abstand zwischen Hebelkopf und Schwenkachse S / Abstand zwischen Berührpunkt und Schwenkachse) beträgt ca. 1,3.

Bei einer axialen Bewegung der Schiebemuffe 70 aus einer Neutralstellung N, bei der eine Mittellängsachse 55 des Hebels 50 in einer mittleren Ebene 81 der Schiebemuffe 70 liegt, also der Hebel 50 praktisch keine axiale Kraft auf den Synchronring 30 ausübt, in Richtung R1 bewegt wird, kommt der Hebelkopf 53 zur Anlage mit der geneigten Rampe 78. Neben der oben beschriebenen Schwenkbewegung um die Schwenkachse S kommt es aber auch zu einer radialen Bewegung in Richtung der Achse 3 gegen die Kraft der Blattfeder 54 (nur in Figur 1 dargestellt). Die Schwenkbewegung des Hebels 50 drückt den Synchronring 30 mit seiner Reibfläche 31 gegen die Reibfläche 92 des Kupplungskörpers 90, so dass der Synchronring aufgrund des nun anliegenden Reibmoments zwischen den Reibflächen 31, 92 in Umfangsrichtung verdreht wird. Die Verdrehung in Umfangsrichtung wird durch den Anschlag des Anschlagnockens 34 an dem Hebelende 51 bzw. 52 begrenzt. Der Synchronring befindet sich nun in seiner Sperrposition oder genauer gesagt in einer seiner Sperrpositionen. Der Synchronring 30 liegt nun an dem Hebel 50 an, welcher durch weitere Bewegung der Schiebemuffe weiter radial nach innen gedrückt wird. Dadurch wird der Synchronring bei ständiger Anlage an dem Hebel 50 leicht in Umfangrichtung verdreht, jedoch aber nur in einem kleinen Umfang, ohne seine Sperrposition oder den Bereich seiner Sperrpositionen zu verlassen.

Ist die axiale Verschiebung der Schiebemuffe 70 weiter fortgeschritten, kommen die Zähne 76 der Verzahnung 72 der Schiebemuffe 70 zur Anlage mit den Sperrzähnen 33 der Sperrverzahnung 32 des Synchronrings 30. Bei einer weiteren axialen Bewegung der Schiebemuffe 70 um einen bestimmten axialen Weg Δsₐₓᵢₐₗ müsste - bedingt durch die Neigung der Zahnflanke 77 des Zahn 76 der Schiebemuffe 70 - der Synchronring einen Weg Δs_{Umfang,Zahn} zurücklegen. Dieser Weg Δs_{Umfang,Zahn} ist jedoch größer als ein Weg Δs_{Umfang,Hebel}, der sich durch den Einfluss des Hebel 50 auf den Synchronring 30 bei gleichem axialen Weg Δsₐₓᵢₐₗ der Schiebemuffe ergeben würde. Dies bedeutet, dass der Anschlagnocken 34 des Synchronrings 30 vom Hebelende 51 bzw. 52 abheben und somit der Momentenfluss zwischen Hebel 50 und Synchronring 30 in Umfangsrichtung unterbrochen würde. Das Entsperrmoment der in Eingriff stehenden Verzahnungen 32, 72 ist jedoch nicht in der Lage, den Synchronring allein gegen das Reibmoment zu verdrehen. Es entsteht somit ein Momentengleichgewicht zwischen Reibmoment in die eine Umfangsrichtung und der Summe von Hebel-Entsperrmoment und Verzahnungs-Entsperrmoment in die andere Umfangsrichtung. Erst wenn das Reibmoment aufgrund erfolgter Synchronisation zusammenbricht, kann die Schiebemuffe bei gleichzeitiger Verdrehung des Synchronrings weiter axial verschoben werden. Dabei verliert nun der Hebel 50 endgültig den Kontakt zum Anschlagnocken 54 des Synchronrings 30.

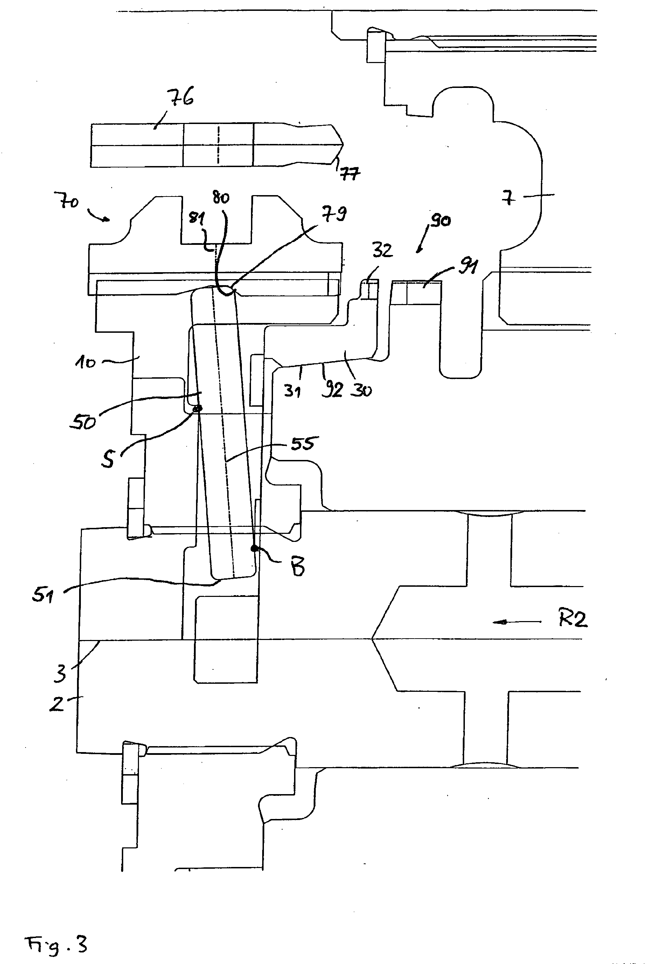

Figur 3 zeigt ebenfalls eine Seitenansicht der Synchroneinheit 1, jedoch nun die Schiebemuffe 70 in einer anderen Axialposition. Hier wird die Schiebemuffe 70 in eine zweite axiale Richtung R2 gedrückt. Bei einer derartigen Verschiebung in Richtung R2 kommen die Zähne 76 der Schiebemuffe 70 und die Sperrzähne 33 nicht in Eingriff. Bedingt durch die andere Axialposition der Schiebemuffe 70 weist der Hebel 50 eine andere Schwenkposition auf, wobei Schwenkachse S und Berührpunkt B gegenüber Figur 2 deutlich in ihrer Lage verändert sind. Dies führt zu einer Reduzierung der axialen Kraft, die auf den Synchronring 30 einwirkt. Das Hebellängenverhältnis ist hier kleiner 1, nämlich ca. 0,9.

Zu erkennen ist auch, dass der Hebelkopf nun an einer anderen Rampe 79 der Schiebemuffe anliegt, die einen deutlich größeren Neigungswinkel aufweisen. Dieser große Neigungswinkel führt dazu, dass durch den Hebel 50 auf den Synchronring 30, der über Anschlagnocken 34 und Hebelende 51 mit dem Hebel 50 zusammenwirkt, ein kleines Hebel-Entsperrmoment eingeleitet wird. Dieses Hebel-Entsperrmoment für die Verschiebung der Schiebemuffe 70 in Richtung R2 ist dabei kleiner als das Reibmoment, das durch das Anpressen des Synchronrings 30 an den Kupplungskörper 8 erzeugt wird. Somit kann, soweit die Synchroneinheit für eine Synchronisierung mit Sperrwirkung ausgelegt ist, die Schiebemuffe 70 in Richtung R2 nur dann weiter geschoben werden, wenn zwischen Losrad 5 und Synchronring 30 keine Drehzahldifferenz mehr gegeben ist. Somit kann die Welle 2 wirksam abgebremst werden, wenn das Losrad 5 feststeht, um beispielsweise einen Rückwärtsgang einzulegen. Bei einer Auslegung der Synchronisation ohne Sperrwirkung könnte die Drehzahldifferenz zwischen Losrad 5 und Synchronring 30 möglicherweise ungleich null sein, wenn der Rückwärtsgang eingelegt wird.

### Bezugszeichenliste

- 1: Synchroneinheit
- 2: Welle
- 3: Achse
- 4: Außenverzahnung
- 5: Losrad
- 6: Hauptverzahnung
- 7: Zahnrad
- 10: Nabe
- 11: Außenumfangsfläche
- 12: Verzahnung
- 13: Innenumfangsfläche
- 14: Verzahnung
- 15: Aussparung
- 30: Synchronring
- 31: Reibfläche
- 32: Sperrverzahnung
- 34, 34a: Anschlagnocken
- 50, 50a: Hebel
- 51: Hebelende
- 52: Hebelende
- 53: Hebelkopf
- 54: Blattfeder
- 55: Mittellängsachse
- 70: Schiebemuffe
- 71: Innenumfangsfläche
- 72: Verzahnung
- 73: Außenumfangsfläche
- 74: Nut
- 75: Nutwand
- 76: Zahn
- 77: Zahnflanke
- 78: Rampe
- 79: Rampe
- 80: Kontaktfläche
- 81: mittlere Ebene
- 90: Kupplungskörper
- 91: Kupplungszahnrad
- 92: Reibfläche

## Patentansprüche

1. Synchroneinheit (1) für ein Schaltgetriebe, das wenigstens eine um eine Achse (3) drehbare Welle (2) und wenigstens ein erstes auf der Welle (2) sitzenden Losrad (5) mit einem Kupplungskörper (90) umfasst, der eine Reibfläche (92) aufweist, wobei die Synchroneinheit (1) ausgestattet ist mit
- einer Nabe (10), die drehfest auf der Welle (2) sitzt, wenn sich die Synchroneinheit (1) in Einbaulage befindet;
- einem Synchronring (30), der relativ zur Nabe (10) begrenzt verdrehbar ist und der wenigstens einen Anschlagnocken (34, 34a) und eine Reibfläche (31) aufweist, die sich axial gegen die Reibfläche (92) des Kupplungskörpers (90) des ersten Losrads (5) drücken lässt,
- eine Schiebemuffe (70), die axial verschiebbar und drehfest mit der Nabe (10) verbunden ist und die an einer Umfangsinnenfläche (71) eine Kontaktfläche (80) und eine Verzahnung (72) aufweist,
- einen ersten Hebel (50), der in der Nabe (10) angeordnet ist und wenigstens ein Hebelende (51, 52) und einen Hebelkopf (53) aufweist,
wobei zumindest bei bestimmten Axialpositionen der Schiebemuffe (70) der Hebelkopf (53) an der Kontaktfläche anliegt,
wobei die Kontaktfläche (80) und der Hebelkopf (53) derart ausgelegt sind, dass eine an der Schiebemuffe (70) angreifende Kraft in eine erste axiale Richtung wirkt, die den Hebelkopf (53) in axialer Richtung als auch in radialer Richtung drückt;
wobei der Hebel (50) durch den axialen Druck am Hebelkopf (53) gegen den Synchronring (30) drückt, welcher mit seiner Reibfläche (31) wiederum gegen die Reibfläche (92) des Kupplungskörpers (90) drückt, wodurch auf den Synchronring (30), soweit die Drehzahlen von Synchronring (30) und Kupplungskörper (90) nicht synchronisiert sind, ein Reibmoment wirkt;
wobei durch das Reibmoment der Synchronring (30) in Richtung einer Sperrposition verdreht wird bzw. eine Sperrposition einnimmt, bei der sich der Synchronring (30) mit dem Anschlagnocken (34) in Umfangsrichtung an dem Hebelende (51, 52) abstützt, was zu einem Hebel-Entsperrmoment führt
wobei der radiale Druck am Hebelkopf (53) die Position des Hebelendes (51, 52), die Position des am Hebelende (51, 52) anliegenden Anschlagnockens (34) des Synchronrings (30) und folglich die Sperrposition in Umfangsrichtung ändert,
**dadurch gekennzeichnet, dass** der Synchronring (30) eine Sperrverzahnung (32) aufweist,
wobei die Verzahnung (72) der Schiebemuffe (70) in Sperrposition des Synchronrings (30) mit der Sperrverzahnung (32) in Anlage bringbar ist, wodurch ein dem Reibmoment entgegen wirkendes Verzahnungs-Entsperrmoment erzeugt wird.

2. Synchroneinheit (1) nach Anspruch 1, **dadurch gekennzeichnet, dass** das Hebel-Entsperrmoment, welches durch die Anlage des Anschlagnockens (34) an dem Hebelende (51, 52) auf den Synchronring (30) wirkt, zumindest in einer Anfangsphase der Synchronisation größer als das Reibmoment ist.

3. Synchroneinheit (1) nach Anspruch 1 oder 2, **dadurch gekennzeichnet, dass** der erste Hebel (50) C-förmig ausgebildet ist.

4. Synchroneinheit (1) nach einem der Ansprüche 1 bis 3, **dadurch gekennzeichnet, dass** der erste Hebel (50) durch den axialen Druck auf den Hebelkopf (53) im wesentlichen eine Schwenkbewegung um eine Schwenkachse vollführt, die senkrecht zur Achse (3) der Welle (2) verläuft, wobei ein Hebellängenverhältnis des Hebels (50), also ein Verhältnis zwischen einem Abstand des Hebelkopfes (53) zur Schwenkachse (S) einerseits und einem Abstand zwischen Schwenkachse (S) und Berührpunkt (B) zwischen Hebel (50) und Synchronring (30) andererseits ungleich 1 ist.

5. Synchroneinheit (1) nach einem der Ansprüche 1 bis 4, **dadurch gekennzeichnet, dass** die Kontaktfläche (80) der Schiebemuffe (70) und der Hebelkopf (53) eine erste Rampe (78) mit einer Neigung kleiner als 45° Grad bezogen auf die Achse (3) der Welle (2) umfassen.

6. Synchroneinheit (1) nach einem der Ansprüche 1 bis 5, **dadurch gekennzeichnet, dass** die Kontaktfläche und der Hebelkopf (53) derart ausgebildet sind, dass ausgehend von einer Neutralstellung N der Schiebemuffe die Schiebemuffe in die erste axiale Richtung (R1) und in eine zweite axiale Richtung (R2) verschiebbar ist, wobei der Hebelkopf (53) ebenfalls in die erste axiale Richtung (R1) bzw. in die zweite axiale Richtung (R2) gedrückt wird.

7. Synchroneinheit (1) nach Anspruch 6, **dadurch gekennzeichnet, dass** das Hebellängenverhältnis des Hebelarmes für die erste axiale Richtung (R1) ungleich dem Hebellängenverhältnis für die zweite axiale Richtung (R2) ist.

8. Synchroneinheit (1) nach Anspruch 6 oder 7, **dadurch gekennzeichnet, dass** die Kontaktfläche (80) der Schiebemuffe (70) und der Hebelkopf (53) eine zweite Rampe (79) umfasst, die eine Neigung aufweist, die bei Verschiebung der Schiebemuffe (70) in die zweite axiale Richtung (R2) in Wirkung kommt und die größer als die Neigung der ersten Rampe ist.

## Claims

1. Synchronizer unit (1) for a manual transmission which comprises at least one shaft (2) rotatable about an axis (3) and at least one first loose wheel (5) seated on the shaft (2) and having a clutch body (90) which has a friction surface (92), the synchronizer unit (1) being equipped with
- a hub (10) which is seated fixed in terms of rotation on the shaft (2) when the synchronizer unit (1) is in the installation position;
- a synchronizing ring (30) which is rotatable to a limited extent in relation to the hub (10) and which has at least one stop boss (34, 34a) and a friction surface (31) which can be pressed axially against the friction surface (92) of the clutch body (90) of the first loose wheel (5),
- a sliding sleeve (70) which is connected axially displaceably and fixedly in terms of rotation to the hub (10) and which has on a circumferential inner face (71) a contact surface (80) and a toothing (72),
- a first lever (50) which is arranged in the hub (10) and has at least one lever end (51, 52) and a lever head (53),
the lever head (53) bearing against the contact surface at least in specific axial positions of the sliding sleeve (70),
the contact surface (80) and the lever head (53) being designed in such a way that a force acting upon the sliding sleeve (70) acts in a first axial direction which presses the lever head (53) in the axial direction and in the radial direction;
the lever (50), as a result of the axial pressure on the lever head (53), pressing against the synchronizing ring (30) which, in turn, presses with its friction surface (31) against the friction surface (92) of the clutch body (90), as a result of which, in so far as the rotational speeds of the synchronizing ring (30) and of the clutch body (90) are not synchronized, a moment of friction acts upon the synchronizing ring (30);
as a result of the moment of friction the synchronizing ring (30) being rotated in the direction of a blocking position or assuming a blocking position in which the synchronizing ring (30) is supported with the stop boss (34) on the lever end (51, 52) in the circumferential direction, thus leading to a lever unblocking moment;
the radial pressure on the lever head (53) changing the position of the lever end (51, 52), the position of the stop boss (34), bearing against the lever end (51, 52), of the synchronizing ring (30) and consequently the blocking position in the circumferential direction, **characterized in that** the synchronizing ring (30) has a blocking toothing (32),
the toothing (72) of the sliding sleeve (70) being capable of being brought into bearing contact with the blocking toothing (32) in the blocking position of the synchronizing ring (30), as a result of which a toothing unblocking moment counteracting the moment of friction is generated.

2. Synchronizer unit (1) according to Claim 1, **characterized in that** the lever unblocking moment which acts upon the synchronizing ring (30) as a result of the bearing of the stop boss (34) against the lever end (51, 52) is higher than the moment of friction at least in an initial phase of synchronization.

3. Synchronizer unit (1) according to Claim 1 or 2, **characterized in that** the first lever (50) is of C-shaped design.

4. Synchronizer unit (1) according to one of Claims 1 to 3, **characterized in that**, by the axial pressure upon the lever head (53), the first lever (50) executes essentially a pivoting movement about a pivot axis which runs perpendicularly to the axis (3) of the shaft (2), a lever length ratio of the lever (50), that is to say a ratio between a distance of the lever head (53) from the pivot axis (S) on the one hand, and a distance between the pivot axis (S) and a contact point (B) between the lever (50) and synchronizing ring (30) on the other hand, being unequal to 1.

5. Synchronizer unit (1) according to one of Claims 1 to 4, **characterized in that** the contact surface (80) of the sliding sleeve (70) and the lever head (53) comprise a first ramp (78) having an inclination lower than 45 degrees with respect to the axis (3) of the shaft (2).

6. Synchronizer unit (1) according to one of Claims 1 to 5, **characterized in that** the contact surface and the lever head (53) are designed in such a way that, starting from a neutral position N of the sliding sleeve, the sliding sleeve can be displaced in the first axial direction (R1) and in a second axial direction (R2), the lever head (53) likewise being pressed in the first axial direction (R1) and in the second axial direction (R2) respectively.

7. Synchronizer unit (1) according to Claim 6, **characterized in that** the lever length ratio of the lever arm for the first axial direction (R1) is unequal to the lever length ratio for the second axial direction (R2).

8. Synchronizer unit (1) according to Claim 6 or 7, **characterized in that** the contact surface (80) of the sliding sleeve (70) and the lever head (53) comprise a second ramp (79) having an inclination which comes into action during the displacement of the sliding sleeve (70) in the second axial direction (R2) and which is higher than the inclination of the first ramp.

## Revendications

1. Unité de synchronisation (1) pour boîte de vitesses, comprenant au moins un arbre (2) pouvant tourner autour d'un axe (3) et au moins un premier pignon fou (5) reposant sur l'arbre (2) avec un corps d'accouplement (90) qui présente une surface de friction (92), l'unité de synchronisation (1) comprenant :
- un moyeu (10) qui repose de manière solidaire en rotation sur l'arbre (2) lorsque l'unité de synchronisation (1) se trouve dans la position d'installation ;
- une bague de synchronisation (30) qui peut tourner de manière limitée par rapport au moyeu (10) et qui présente au moins une came de butée (34, 34a) et une surface de friction (31) qui peut être pressée axialement contre la surface de friction (92) du corps d'accouplement (90) du premier pignon fou (5),
- un manchon coulissant (70) qui est connecté de manière déplaçable axialement et de manière solidaire en rotation au moyeu (10) et qui présente au niveau d'une surface périphérique interne (71) une surface de contact (80) et une denture (72),
- un premier levier (50) qui est disposé dans le moyeu (10) et qui présente au moins une extrémité de levier (51, 52) et une tête de levier (53),
la tête de levier (53) s'appliquant contre la surface de contact au moins dans des positions axiales déterminées du manchon coulissant (70),
la surface de contact (80) et la tête de levier (53) étant conçues de telle sorte qu'une force agissant sur le manchon coulissant (70) agisse dans une première direction axiale qui presse la tête de levier (53) dans la direction axiale ainsi que dans la direction radiale ;
le levier (50) pressant contre la bague de synchronisation (30) par la pression axiale appliquée à la tête de levier (53), laquelle bague de synchronisation presse à son tour avec sa surface de friction (31) contre la surface de friction (92) du corps d'accouplement (90), de sorte qu'un couple de friction agisse sur la bague de synchronisation (30), tant que les vitesses de rotation de la bague de synchronisation (30) et du corps d'accouplement (90) ne sont pas synchronisées ;
du fait du couple de friction, la bague de synchronisation (30) étant tournée dans la direction d'une position de verrouillage ou adoptant une position de verrouillage dans laquelle la bague de synchronisation (30) s'appuie avec la came de butée (34) dans la direction périphérique au niveau de l'extrémité de levier (51, 52), ce qui conduit à un couple de déverrouillage du levier ;
la pression radiale appliquée à la tête de levier (53) modifiant la position de l'extrémité de levier (51, 52), la position de la came de butée (34) de la bague de synchronisation (30) s'appliquant contre l'extrémité de levier (51, 52) et par conséquent la position de verrouillage dans la direction périphérique,
**caractérisée en ce que** la bague de synchronisation (30) présente une denture de verrouillage (32),
la denture (72) du manchon coulissant (70) pouvant être amenée en butée dans la position de verrouillage de la bague de synchronisation (30) avec la denture de verrouillage (32) de sorte qu'un couple de déverrouillage de denture agissant à l'encontre du couple de friction soit produit.

2. Unité de synchronisation (1) selon la revendication 1, **caractérisée en ce que** le couple de déverrouillage de levier qui agit par l'application de la came de butée (34) contre l'extrémité de levier (51, 52) sur la bague de synchronisation (30), au moins dans une phase de début de synchronisation, est supérieur au couple de friction.

3. Unité de synchronisation (1) selon la revendication 1 ou 2, **caractérisée en ce que** le premier levier (50) est réalisé en forme de C.

4. Unité de synchronisation (1) selon l'une quelconque des revendications 1 à 3, **caractérisée en ce que** le premier levier (50), sous l'effet de la pression axiale sur la tête de levier (53), effectue essentiellement un mouvement de pivotement autour d'un axe de pivotement qui s'étend perpendiculairement à l'axe (3) de l'arbre (2), un rapport de longueur de levier du levier (50), c'est-à-dire un rapport entre une distance de la tête de levier (53) à l'axe de pivotement (S) d'une part et une distance entre l'axe de pivotement (S) et le point de contact (B) entre le levier (50) et la bague de synchronisation (30) d'autre part, n'étant pas égal à 1.

5. Unité de synchronisation (1) selon l'une quelconque des revendications 1 à 4, **caractérisée en ce que** la surface de contact (80) du manchon coulissant (70) et la tête de levier (53) comprennent une première rampe (78) dont l'inclinaison est inférieure à 45° par rapport à l'axe (3) de l'arbre (2).

6. Unité de synchronisation (1) selon l'une quelconque des revendications 1 à 5, **caractérisée en ce que** la surface de contact et la tête de levier (53) sont réalisées de telle sorte qu'à partir d'une position neutre N du manchon coulissant, le manchon coulissant puisse être déplacé dans la première direction axiale (R1) et dans une deuxième direction axiale (R2), la tête de levier (53) étant également pressée dans la première direction axiale (R1) ou dans la deuxième direction axiale (R2).

7. Unité de synchronisation (1) selon la revendication 6, **caractérisée en ce que** le rapport de longueur de levier du bras de levier pour la première direction axiale (R1) est différent du rapport de longueur de levier pour la deuxième direction axiale (R2).

8. Unité de synchronisation (1) selon la revendication 6 ou 7, **caractérisée en ce que** la surface de contact (80) du manchon coulissant (70) et la tête de levier (53) comprennent une deuxième rampe (79) qui présente une inclinaison qui entre en action lors du déplacement du manchon coulissant (70) dans la deuxième direction axiale (R2) et qui est supérieure à l'inclinaison de la première rampe.
